(19) **Europäisches Patentamt / European Patent Office / Office européen des brevets**

(11) **EP 4 439 966 A1**

(12) **EUROPEAN PATENT APPLICATION**
published in accordance with Art. 153(4) EPC

(43) Date of publication:
**02.10.2024 Bulletin 2024/40**

(21) Application number: **22898330.0**

(22) Date of filing: **28.10.2022**

(51) International Patent Classification (IPC):
**H02N 2/06** (2006.01)    **G02B 7/04** (2021.01)
**G03B 17/56** (2021.01)    **G03G 21/00** (2006.01)
**G03G 21/16** (2006.01)

(52) Cooperative Patent Classification (CPC):
**G02B 7/04; G03B 17/56; G03G 21/00;
G03G 21/16; H02N 2/06**

(86) International application number:
**PCT/JP2022/040382**

(87) International publication number:
**WO 2023/095545 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2021 JP 2021190618**

(71) Applicant: **CANON KABUSHIKI KAISHA
Tokyo 146-8501 (JP)**

(72) Inventors:
• **WATANABE, Takayuki
  Tokyo 146-8501 (JP)**
• **UEBAYASHI, Akira
  Tokyo 146-8501 (JP)**
• **SUMIOKA, Jun
  Tokyo 146-8501 (JP)**

(74) Representative: **Canon Europe Limited
European Intellectual Property Group
4 Roundwood Avenue
Stockley Park
Uxbridge UB11 1AF (GB)**

(54) **VIBRATION-TYPE DRIVE DEVICE, VIBRATION-TYPE ACTUATOR CONTROL DEVICE, AND EQUIPMENT**

(57)    A vibration-type drive apparatus 10 includes a vibration-type actuator 200 and a control apparatus 100. The vibration-type actuator 200 includes a vibration member 210 including an elastic member 212 and a piezoelectric element 211 bonded together, and a contact member 220 in contact with the elastic member 212. The control apparatus 100 includes a drive unit 120 including a transformer 1222 for converting an input signal into an alternating current voltage to be applied to the piezoelectric element 211, and a control unit 110 for controlling frequency, phase, and voltage of the input signal. The relationship $0.79 \leq f1/fu \leq 1.21$ is satisfied, where f1 is a frequency at which a current in a primary side of the transformer 1222 becomes minimum, and fu is a resonance frequency of unwanted vibration.

**FIG.1**

EP 4 439 966 A1

**Description**

Technical Field

The present invention relates to a vibration-type drive apparatus, electronic equipment including the vibration-type drive apparatus, optical equipment, and a vibration-type actuator control apparatus.

Background Art

A vibration-type actuator is a non-electromagnetic drive type actuator (motor) configured to bring a contact member and a vibration member into contact with each other and extract vibration energy of high-frequency vibration generated in the vibration member as mechanical motion that moves the contact member and the vibration member relatively. In general, the vibration member is formed by bonding an electro-mechanical energy conversion element, such as a piezoelectric element, to an elastic member. A control apparatus that controls the driving of the vibration-type actuator includes a pulse signal generation circuit for generating pulse signals and a step-up circuit for applying an alternating current voltage amplified by a transformer to the electro-mechanical energy conversion element.

The vibration-type actuator is capable of controlling relative moving speeds of the contact member and the vibration member by controlling frequency, amplitude, and phase difference of the alternating current voltage applied to the electro-mechanical energy conversion element. The vibration-type actuator is used in, for example, driving of a focus lens to perform an autofocus operation in an imaging apparatus serving as optical equipment.

The autofocus operation requires highly-accurate positioning control, and in general, the focus lens is controlled to stop at a target stop position after being accelerated, maintained at a constant speed, and decelerated by position feedback control and the like using a position sensor. In this control, it is desirable to increase the drive efficiency of the focus lens by reducing power consumption of the control apparatus, and in order to achieve this, the design of a step-up circuit (resonance circuit) using electrical resonance of an electro-mechanical energy conversion element in a drive circuit is important. In a case where a step-up circuit using a transformer is used, circuit constants need to be controlled according to a frequency domain for use in driving the vibration-type actuator. In controlling the circuit using its constants, not only electrical elements such as a transformer, a coil, and a capacitor but also an equivalent coil and an equivalent capacitor of a mechanical vibration portion of the vibration member need to be taken into consideration. In relation to those described above, for example, Patent Literature 1 discusses a control apparatus configured so that a parallel resonance frequency generated by a capacitance of a piezoelectric element and an output coil of a step-up transformer falls between a resonance frequency of a motor and a frequency at which an amplitude characteristic of the motor reaches the lowest level for the first time.

With a drive circuit discussed in Patent Document 1, transformer output voltage fluctuations in a frequency band slightly higher than the resonance frequency are reduced. However, as to power consumption, only reactive current of a vibration-type actuator is reduced, and there is a demand for a step-up circuit capable of further reducing power consumption. The reactive current refers to a current that flows into a capacitance in an electro-mechanical energy conversion element and is a current component that does not contribute to vibration.

Citation List

Patent Literature

PTL 1: Japanese Patent No. 2879220

Summary of Invention

Technical Problem

The present invention is directed to providing a vibration-type drive apparatus capable of reducing power consumption in driving a vibration-type actuator.

Solution to Problem

According to an aspect of the present invention, a vibration-type drive apparatus includes a vibration-type actuator including a vibration member including an elastic member and an electro-mechanical energy conversion element, and a contact member in contact with the elastic member, the vibration member being configured to vibrate to move the vibration member and the contact member relatively, and a control apparatus including a drive unit with a transformer configured to transform a drive signal generated based on an input control signal, the transformer having a primary side to which the drive signal is input and a secondary side connected to the electro-mechanical energy conversion element, wherein the following relationship is satisfied:

$$0.79 \leq f1/fu \leq 1.21 \qquad ,$$

where f1 is a frequency of the drive signal at which a current that flows in the primary side of the transformer becomes minimum, and fu is a resonance frequency of a vibration mode other than vibration for use in moving the vibration member and the contact member relatively and is greater than the f1.

Advantageous Effects of Invention

The present invention makes it possible to reduce power consumption in driving a vibration-type actuator.

Brief Description of Drawings

[Fig. 1] Fig. 1 is a block diagram illustrating a schematic configuration of a vibration-type drive apparatus according to a first exemplary embodiment.
[Fig. 2A] Fig. 2A is a diagram illustrating a schematic configuration and a vibration mode of a vibration-type actuator of the vibration-type drive apparatus in Fig. 1.
[Fig. 2B] Fig. 2B is a diagram illustrating a schematic configuration and a vibration mode of the vibration-type actuator of the vibration-type drive apparatus in Fig. 1.
[Fig. 2C] Fig. 2C is a diagram illustrating a schematic configuration and a vibration mode of the vibration-type actuator of the vibration-type drive apparatus in Fig. 1.
[Fig. 2D] Fig. 2D is a diagram illustrating a schematic configuration and a vibration mode of the vibration-type actuator of the vibration-type drive apparatus in Fig. 1.
[Fig. 2E] Fig. 2E is a diagram illustrating a schematic configuration and a vibration mode of the vibration-type actuator of the vibration-type drive apparatus in Fig. 1.
[Fig. 2F] Fig. 2F is a diagram illustrating a schematic configuration and a vibration mode of the vibration-type actuator of the vibration-type drive apparatus in Fig. 1.
[Fig. 3] Fig. 3 is a diagram illustrating an admittance-frequency characteristic of a vibration member of a vibration-type actuator according to the present invention.
[Fig. 4] Fig. 4 is a circuit diagram illustrating a drive circuit of the vibration-type drive apparatus in Fig. 1.
[Fig. 5A] Fig. 5A is a diagram illustrating a variation of the drive circuit in Fig. 4 (fourth exemplary embodiment).
[Fig. 5B] Fig. 5B is a diagram illustrating a variation of the drive circuit in Fig. 4 (third exemplary embodiment).
[Fig. 6A] Fig. 6A is a diagram illustrating pulse signals output from a pulse signal generation circuit of the drive circuit in Fig. 4.
[Fig. 6B] Fig. 6B is a diagram illustrating pulse signals output from the pulse signal generation circuit of the drive circuit in Fig. 4.
[Fig. 7A] Fig. 7A is a diagram illustrating results of calculating a current that flows in a primary side coil of a transformer of the drive circuit in Fig. 4 (eleventh example).
[Fig. 7B] Fig. 7B is a diagram illustrating results of calculating a current that flows in a primary side coil of a transformer of the drive circuit in Fig. 4 (ninth example).
[Fig. 7C] Fig. 7C is a diagram illustrating results of calculating a current that flows in a primary side coil of a transformer of the drive circuit in Fig. 4 (first comparative example).
[Fig. 8A] Fig. 8A is a diagram illustrating a drive characteristic of a vibration-type drive apparatus according to the first comparative example.
[Fig. 8B] Fig. 8B is a diagram illustrating a drive characteristic of a vibration-type drive apparatus according to a second comparative example.
[Fig. 9A] Fig. 9A is a diagram illustrating a drive characteristic of a vibration-type drive apparatus according to the ninth example.
[Fig. 9B] Fig. 9B is a diagram illustrating a drive characteristic of a vibration-type drive apparatus according to a tenth example.
[Fig. 10] Fig. 10 is a perspective view illustrating a schematic structure of a lens drive mechanism.
[Fig. 11] Fig. 11 is a diagram illustrating another configuration of a vibration-type actuator.

[Fig. 12A] Fig. 12A is a diagram illustrating yet another configuration of a vibration-type actuator.
[Fig. 12B] Fig. 12B is a diagram illustrating yet another configuration of the vibration-type actuator.
[Fig. 12C] Fig. 12C is a diagram illustrating yet another configuration of the vibration-type actuator.
[Fig. 13A] Fig. 13A is a diagram illustrating an example of equipment including a vibration-type drive apparatus.
[Fig. 13B] Fig. 13B is a diagram illustrating an example of equipment including the vibration-type drive apparatus.

Description of Embodiments

Various exemplary embodiments of the present invention will be described in detail below with reference to the attached drawings. Hereinafter, a "vibration-type drive apparatus" includes a "vibration-type actuator" and a "control apparatus", the "vibration-type actuator" includes a "vibration member" and a "contact member", and the "vibration member" includes an "elastic member" and an "electro-mechanical energy conversion element". Further, while the vibration member and the contact member move relatively in response to the vibration-type actuator being driven, for convenience of description, a case where the vibration member is fixed at a predetermined position and the contact member is movable relative to the vibration member will be described below.

The vibration-type drive apparatus according to the present exemplary embodiment includes the vibration member including the elastic member and the electro-mechanical energy conversion element, and the contact member in contact with the elastic member. The vibration-type drive apparatus further includes the vibration-type actuator in which a vibration of the vibration member moves the vibration member and the contact member relative to each other. Furthermore, the vibration-type drive apparatus includes the control apparatus including a drive unit with a transformer configured to transform a drive signal generated based on an input control signal, and the transformer has a primary side to which the drive signal is input and a secondary side connected to the electro-mechanical energy conversion element.

The following relationship is satisfied, where f1 is a frequency of the drive signal at which a current that flows in the primary side of the transformer becomes minimum, and fu is a resonance frequency of a vibration mode other than the vibration for use in moving the vibration member and the contact member relatively and is greater than the f1.

Specifically, the relationship $0.79 \leq f1/fu \leq 1.21$ is satisfied.

<First Exemplary Embodiment>

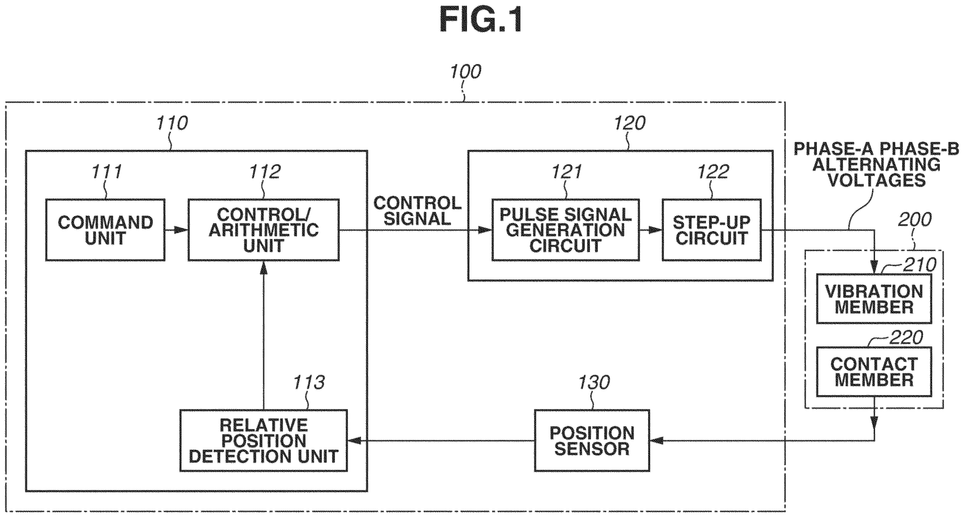

Fig. 1 is a block diagram illustrating a schematic configuration of a vibration-type drive apparatus 10 according to a first exemplary embodiment. The vibration-type drive apparatus 10 includes a vibration-type actuator 200 and a control apparatus 100 configured to control the driving of the vibration-type actuator 200. The control apparatus 100 includes a control unit 110 for generating control signals, a drive unit 120 for receiving the control signals and outputting alternating current signals to be applied to the vibration-type actuator 200, and a position sensor 130. The control unit 110 includes a command unit 111, a control/arithmetic unit 112, and a relative position detection unit 113. The drive unit 120 includes a pulse signal generation circuit 121 and a step-up circuit 122. The vibration-type actuator 200 includes a vibration member 210 and a contact member 220.

The position sensor 130 is, for example, an encoder and detects a position of the contact member 220. The position sensor 130 as hardware may be disposed to the vibration-type actuator 200 separately from the control unit 110 and the drive unit 120. The position sensor 130 herein is included in the control apparatus 100 as a component to be used in controlling of the vibration-type actuator 200.

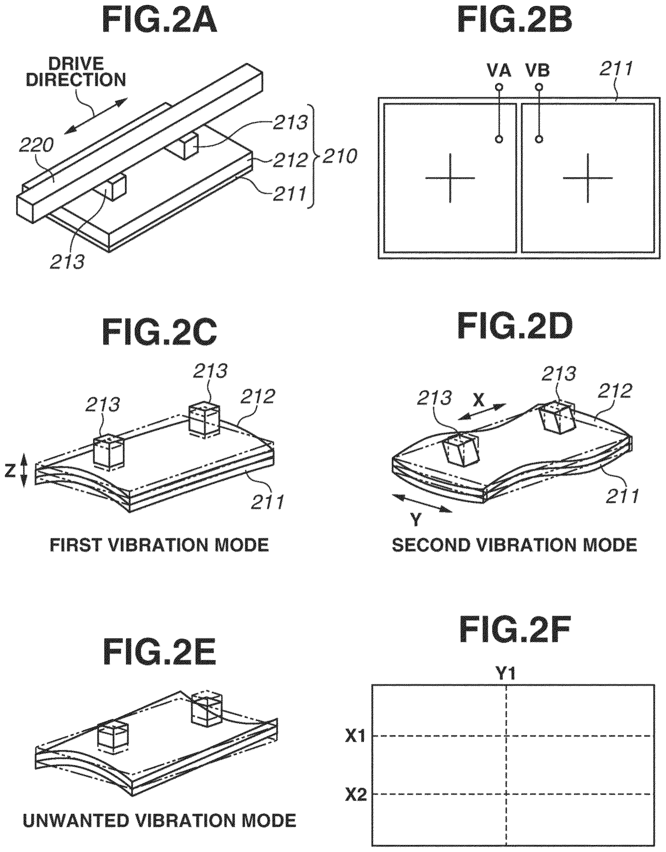

The command unit 111 generates a position command value for the contact member 220 at each time and transmits the generated position command value to the control/arithmetic unit 112. The relative position detection unit 113 detects a position of the contact member 220 based on an output signal from the position sensor 130 and transmits the detected position signal to the control/arithmetic unit 112. The control/arithmetic unit 112 calculates a position deviation between the position command value input from the command unit 111 and the position signal input from the relative position detection unit 113, converts it into a control signal, and outputs the control signal to the drive unit 120. The control signal refers to a pulse signal control parameter for use in generation of alternating current voltages $V_A$ and $V_B$ (described below with reference to Fig. 2B) to be applied to a piezoelectric element 211 (refer to Fig. 2A) of the vibration member 210 and described below.

The control parameter is a phase difference, a frequency, or a pulse width and is generated based on the position deviation. Relative driving speeds and driving directions of the contact member 220 and the vibration member 210 are controlled based on control variables of the control parameters of phase difference, frequency, and pulse width output from the control unit 110. As described above, the control unit 110 performs position feedback control to control the driving of the vibration-type actuator 200 based on the deviation between the position command value and the actual position of the contact member 220 at each predetermined time.

The control/arithmetic unit 112 uses, for example, a proportional-integral-derivative (PID) controller, but this is not a limiting example. Further, while the configuration for performing position feedback control is described herein, this is not a limiting configuration, and a configuration for performing speed feedback control based on speed deviations may be used. Further, considering the objective of reducing power consumption in driving the vibration-type actuator 200, a configuration for performing open drive control without performing feedback control may be used.

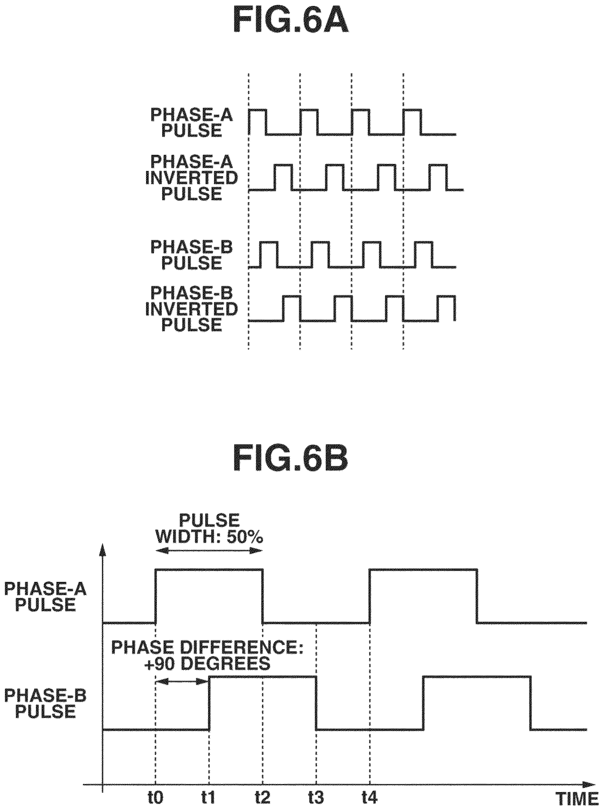

The pulse signal generation circuit 121 generates pulse signals with different phases from each other (phase-A pulse signal, phase-A inverted pulse signal, phase-B pulse signal, and phase-B inverted pulse signal (refer to Figs. 6A and 6B)) based on control signals (control variables of phase difference, frequency, and pulse width) and outputs the generated pulse signals to the step-up circuit 122. The step-up circuit 122 generates an input signal by switching a direct current power supply using the input pulse signals and boosts the input signal to a predetermined voltage using a transformer, thereby generating two-phase alternating current voltages $V_A$ and $V_B$ having an approximately sinusoidal waveform and having different phases from each other.

In a case where a vibration described below is generated in the vibration member 210 by the alternating current voltages $V_A$ and $V_B$, the contact member 220 is moved in a predetermined direction by a friction driving force received from the vibration member 210. The position of the contact member 220 is detected by the position sensor 130, and a detection signal is transmitted to the relative position detection unit 113. As described above, position feedback control is performed on the vibration-type actuator 200 so that the actual position of the contact member 220 follows the position command value at each time.

Figs. 2A, 2B, 2C, 2D, 2E, and 2F are diagrams illustrating a schematic configuration of the vibration-type actuator 200 and vibration modes induced in the vibration member 210. Fig. 2A is a perspective view illustrating a schematic configuration of the vibration-type actuator 200. The vibration member 210 of the vibration-type actuator 200 includes an elastic member 212 having an approximately rectangular plate shape and the piezoelectric element 211 having an approximately rectangular plate shape bonded to one surface of the elastic member 212 using an adhesive. On another surface of the elastic member 212 (the surface on the opposite side to the surface to which the piezoelectric element 211 is bonded), projection portions 213 are provided at two locations.

Fig. 2B is a diagram illustrating an electrode pattern disposed to the piezoelectric element 211.

Figs. 2C and 2D are diagrams illustrating a first vibration mode and a second vibration mode, respectively, induced in the vibration member 210, and Figs. 2E and 2F are diagrams illustrating an unwanted vibration mode.

A direction connecting the two projection portions 213 of the vibration member 210 is defined as an X-direction, a thickness direction of the elastic member 212 of the vibration member 210 is defined as a Z-direction, and a direction orthogonal to the X- and Z-directions is defined as a Y-direction.

On a surface of the piezoelectric element 211 that is on the opposite side to a surface bonded to the elastic member 212, two electrode regions are formed by substantially bisecting in a long side direction (the X-direction), and polarization directions of piezoelectric members in the electrode regions are the same direction (+). Although not illustrated, a single electrode (common electrode) is disposed over substantially the entire surface of the piezoelectric element 211 that is bonded to the elastic member 212.

The alternating current voltage $V_A$ is applied to the left one of the two electrode regions of the piezoelectric element 211 in Fig. 2B, and the alternating current voltage $V_B$ is applied to the right one of the two electrode regions.

In a case where the alternating current voltages $V_A$ and $V_B$ have a frequency close to a resonance frequency of the vibration member and have the same phase, the piezoelectric element 211 stretches at one moment and contracts at another moment overall. Consequently, a vibration of a primary out-of-plane bending vibration mode in which two nodes appear substantially parallel to the X-direction in the vibration member 1 is generated in the vibration member 210 as illustrated in Fig. 2C (the first vibration mode).

Further, in a case where the alternating current voltages $V_A$ and $V_B$ have a frequency close to the resonance frequency of the vibration member and have phases shifted by 180°, one of the electrode regions of the piezoelectric element 211 contracts while the other one stretches at one moment, and vice versa at another moment. Consequently, a vibration of a secondary out-of-plane bending vibration mode in which three nodes appear substantially parallel to the Y-direction in the vibration member 210 is generated in the vibration member 210 as illustrated in Fig. 2D (the second vibration mode).

As described above, the electro-mechanical energy conversion element includes first and second electrodes adjacent to each other and is configured to generate vibrations as described below where a region in which a first electrode is disposed is referred to as the first region, and a region in which a second electrode is disposed is referred to as the second region. Specifically, a first bending vibration mode in which the first region where the first electrode is disposed and the second region where the second electrode is disposed both stretch or contract and a second bending vibration mode in which the second region contracts while the first region stretches or the second region stretches while the first region contracts are formed.

Meanwhile, the alternating current voltages $V_A$ and $V_B$ may be configured to have a frequency greater than frequencies of the first and second vibration modes and close to a resonance frequency of the unwanted vibration mode and to have phases shifted by 180°. With this configuration, one of the electrode regions of the piezoelectric element 211 contracts while the other electrode region stretches at one moment, and vice versa at another moment. Consequently, a vibration of an out-of-plane bending vibration mode is generated in the vibration member 210 as illustrated in Fig. 2E (unwanted vibration mode).

The vibration of the unwanted vibration mode is a high-order bending vibration and includes two node lines X1 and X2 substantially parallel to the X-direction of the elastic member and one node line Y1 substantially parallel to the Y-direction as illustrated in Fig. 2F. The phrase "one node line Y1 substantially parallel" indicates that the node line Y1 is a continuous curve, intersects with two long sides of the elastic member 212, is parallel to short sides of the elastic member 212, and does not intersect with the short sides.

The phrase "two node lines X1 and X2 substantially parallel to the X-direction of the elastic member 212" indicates that the node lines X1 and X2 are continuous curves, intersect with the two short sides of the elastic member 212, do not intersect with each other, do not intersect with the long sides of the elastic member 212, and are parallel to the long sides.

Specifically, in a case where a high-order bending vibration that is an unwanted vibration is generated, six regions in total that are formed by dividing a flat plate surface of the elastic member 212 into three equal regions along the short side direction of the elastic member 212 and dividing the flat plate surface of the elastic member 212 into two equal regions along the long side direction of the elastic member 212 are considered. In each region, there is a maximum amplitude of a vibration in an out-of-plane direction of the flat plate surface of the elastic member 212. In regions adjacent to the six regions, the vibration at the maximum amplitude has a reverse phase.

In general, a vibration of a plate (plate-shaped member) can be expressed in the form of an (m, n)-order vibration mode. For example, a vibration of a square or rectangular plate can be expressed as an (m, n)-order vibration mode based on the numbers of nodes of a standing wave of the vibration in vertical and horizontal directions. A mode with no nodes will be referred to as "first order", and a mode with one node will be referred to as "second order". Specifically, a vibration mode of a rectangular plate in which there are m-1 nodes in the vertical direction and n-1 nodes in the horizontal direction will be referred to as the (m, n)-order vibration mode. A vibration mode at each resonance frequency can be identified by applying vibration with the resonance frequency to the plate, measuring the vibration of the plate at a plurality of locations using a laser Doppler vibrometer, analyzing the obtained vibration data comprehensively, and making an observation using animation. The unwanted vibration mode according to the present exemplary embodiment in the form of an (m, n)-order vibration mode can be expressed as a (2, 3)-order vibration mode.

The projection portions 213 at two locations are disposed near positions of antinodes of vibration of the first vibration mode and positions of nodes of vibration of the second vibration mode. Thus, excitation and superposition are performed so that a vibration phase difference between the first vibration mode and the second vibration mode becomes close to $\pm\pi/2$. Consequently, front edges of the projection portions 213 perform pendulum motion with the nodes of vibration of the second vibration mode as pivots to perform reciprocating motion in the X-direction while the vibration of the first vibration mode causes reciprocating motion in the Z-direction. This generates elliptical motion in the XZ plane in front edge surfaces of the projection portions 213, applies a friction driving force to the contact member 220 being in contact with the front edge surfaces of the projection portions 213, and drives the contact member 220 in the positive or negative direction of the X-direction. In this operation, the driving speed of the contact member 220 can be controlled by changing the phase difference between the alternating current voltages $V_A$ and $V_B$.

The unwanted vibration mode increases in amplitude as the phase difference between the alternating current voltages $V_A$ and $V_B$ increases from 0 to $\pi$, and at a phase difference of 180°, the amplitude reaches its maximum. The unwanted vibration mode vibrates the projection portions 213 in the Z-direction without generating elliptical vibration in the XZ plane. Thus, the contact member cannot achieve sufficient speed in the unwanted vibration mode. However, as the unwanted vibration mode is induced, power is consumed. The power consumed by unwanted vibration is superimposed on the power consumed by drive vibration.

Specifically, by setting the phase difference between the alternating current voltages $V_A$ and $V_B$ between 0° and 180°, the first vibration mode and the second vibration mode are superposed, and the contact member 220 in contact with the projection portions 213 is moved in the X-direction. However, at the same time, the unwanted vibration mode with a resonance frequency close to the drive vibration is excited simultaneously.

The present invention devises a drive circuit for reducing power related to the unwanted vibration.

While the configuration described herein uses the piezoelectric element as an electrical and mechanical energy conversion element and drives using the two-phase alternating current voltages $V_A$ and $V_B$, the control apparatus 100 is also applicable to the driving and control of a vibration-type actuator that drives using alternating current voltages of three or more phases.

The piezoelectric element includes a piezoelectric material and an electrode. In general, lead zirconate titanate ($Pb(Zr, Ti)Os$) with excellent piezoelectric characteristics is used in piezoelectric materials. However, it has been pointed out that lead components may dissolve into the soil and harm the ecosystem. Thus, a piezoelectric material with a lead content ratio less than 1000 ppm is suitable for use. A lead content less than 1000 ppm is desirable because its impact on the environment can be considered negligible.

A piezoelectric material with a lead content less than 1000 ppm desirably consists of a barium titanate-based material because barium titanate-based materials have high piezoelectric constants and are relatively easy to manufacture. The barium titanate-based materials herein refer to compositions, such as barium titanate ($BaTiO_3$), barium calcium titanate ($(Ba, Ca)TiO_3$), barium zirconate titanate ($Ba(Ti, Zr)Os$), barium calcium zirconate titanate ($(Ba, Ca)(Ti, Zr)O_3$), sodium niobate titanate-barium titanate ($NaNbO_3$-$BaTiO_3$), sodium bismuth titanate-barium titanate ($(Bi, Na)TiO_3$-$BaTiO_3$), and potassium bismuth titanate-barium titanate ($(Bi, K)TiO_3$-$BaTiO_3$) and materials containing a composition described above as a main component.

Among those described above, barium calcium titanate zirconate ($(Ba,Ca)(Ti,Zr)O_3$, hereinafter "BCTZ") is desirably used as a main component because both piezoelectric constants and mechanical quality factors of a piezoelectric ceramic can be achieved. The term "main component" indicates that the weight fraction of a material that is the main component is higher than 50%. Further, Mn or Bi or both may be contained as elements other than the main component in order to improve mechanical quality factors or control phase transition temperatures.

BCTZ is specifically a piezoelectric material containing Mn and a perovskite-structured oxide including Ba, Ca, Ti, and Zr. Further, $0.02 \leq x \leq 0.30$, where x is the molar ratio of Ca to the sum of Ba and Ca. Desirably, $0.020 \leq y \leq 0.095$ and $y < x$, where y is the molar ratio of Zr to the sum of Ti and Zr. Desirably, $0.9955 \leq \alpha \leq 1.01$, where $\alpha$ is the ratio between the amount of Ba and Ca in moles and the amount of Ti and Zr in moles, and the Mn content in terms of metal equivalent per 100 parts by weight of oxide is 0.02 parts by weight or more and 1.0 parts by weight or less. The foregoing piezoelectric material can be expressed as the following general formula (1):

$$(Ba_{1-x}Ca_x)_\alpha(Ti_{1-y}Zr_y)O_3 \qquad \text{general formula (1),}$$

where

$$0.986 \leq \alpha \leq 1.100,$$

$$0.02 \leq x \leq 0.30,$$

and

$$0.02 \leq y \leq 0.095.$$

The molar ratio x of Ca in the A-site in general formula (1) is in the range of $0.02 \leq x \leq 0.30$. In a case where some of Ba in barium titanate of the perovskite is replaced with Ca within the above-described range, the phase transition temperature between monoclinic and tetragonal crystals shifts toward lower temperatures, so that stable piezoelectric vibration is achieved in the drive temperature range of the vibration-type actuator. However, in a case where x is greater than 0.30, the piezoelectric constants of the piezoelectric material become insufficient, and the performance of the vibration-type actuator may become insufficient. On the other hand, in a case where x is less than 0.02, dielectric losses ($\tan\delta$) may increase. An increase in dielectric losses may lead to an increase in heat generated in applying a voltage to the piezoelectric material and driving the vibration-type actuator, a decrease in motor drive efficiency, and an increase in power consumption.

The molar ratio y of Zr in the B-site in general formula (1) is in the range of $0.02 \leq y \leq 0.1$. In a case where y is greater than 0.1, a depolarization temperature Td becomes lower than 80°C, and the temperature range in which the vibration-type actuator can be used is limited to temperatures below 80°C. This is undesirable.

In the present specification, the depolarization temperature Td refers to the lowest temperature among temperatures at which the piezoelectric constants of the piezoelectric material after performing polarization processing on the piezoelectric material, heating the piezoelectric material from room temperature to Td one week after the polarization processing, and then cooling the piezoelectric material to room temperature again decreases by 10% or more from the piezoelectric constants before the heating.

Further, desirably, $0.9955 \leq \alpha \leq 1.010$, where $\alpha$ is the ratio between the amount of Ba and Ca in moles in the A-site and the amount of Ti and Zr in moles in the B-site in general formula (1). In a case where $\alpha$ is in the range specified above, abnormal grain growth is less likely to occur, and excellent mechanical strength is achieved. On the other hand, in a case where $\alpha$ is less than 0.9955, abnormal grain growth is more likely to occur in crystalline grains of the piezoelectric material, and the mechanical strength of the piezoelectric material may decrease. Further, in a case where $\alpha$ is greater than 1.010, the piezoelectric material may not be densified and may become extremely brittle.

While the molar ratio between the elements in the B-site and the elements O in general formula (1) is 1:3, the material with a slightly deviated molar ratio is still within the scope of the present invention if the main phase of the metal oxide is a perovskite structure. Whether the metal oxide is perovskite-structured can be determined through structure analysis using, for example, X-ray diffraction or electron diffraction.

The Mn content is desirably 0.02 parts by weight or more and 0.40 parts by weight or less in terms of metal equivalent per 100 parts by weight of the metal oxide. With the Mn content within the range specified above, insulating properties and a mechanical quality factor Qm improve. The mechanical quality factor Qm herein is a coefficient representing an elastic loss due to vibration in evaluating the piezoelectric material as an oscillator, and the magnitude of the mechanical quality factor is observed as the sharpness of a resonance curve in impedance measurement. Specifically, it is a constant indicating the sharpness of the resonance of the oscillator. In a case where the mechanical quality factor Qm is high, a strain amount of the piezoelectric material further increases near the resonance frequency, and the piezoelectric material is vibrated effectively.

The metal equivalent indicating the Mn content expresses the relative weight of Mn in a case where the elements of the metal oxide represented by general formula (1) are converted into oxide equivalents from the content of each metal, Ba, Ca, Ti, Zr, and Mn, and the total weight thereof is taken as 100.

In a case where the Mn content is less than 0.02 parts by weight, the effect of polarization processing necessary for driving the vibration-type actuator may not be sufficient. On the other hand, in a case where the Mn content is more than 0.40 parts by weight, the piezoelectric characteristics of the piezoelectric material may not be sufficient, and a crystal with a hexagonal crystal structure without piezoelectric characteristics may appear.

The content form of Mn is not limited to metallic Mn, and Mn may be present in any form as a Mn component in the piezoelectric material. For example, Mn may be dissolved in the B-site or may be present in the grain boundary. Alternatively, a Mn component may be present in the form of a metal, an ion, an oxide, a metal salt, or a complex in the piezoelectric ceramic 1. From the point of view of insulating properties and ease of sintering, the form dissolved in the B-site is more desirable.

Further, the piezoelectric material desirably contains Bi in an amount of 0.042 parts by weight or more and 0.850 parts by weight or less in terms of metal equivalent. The piezoelectric material may contain Bi in an amount of 0.85 parts by weight or less in terms of metal equivalent with respect to 100 parts by weight of the metal oxide represented by general formula (1). Bi may be present in the grain boundary of the piezoelectric material in a ceramic state or may be dissolved in the perovskite structure of $(Ba,Ca)(Ti,Zr)O_3$. The addition of Bi increases the mechanical quality factor, and furthermore the successive phase transition temperature decreases, so that the piezoelectric constants become less temperature-dependent.

The piezoelectric material may contain components (hereinafter, "sub-components") other than the elements included in general formula (1), Mn, and Bi, to the extent that characteristics do not change. The total of the sub-components is desirably less than 1.2 parts by weight with respect to 100 parts by weight of the metal oxide represented by general formula (1). In a case where the sub-components are more than 1.2 parts by weight, piezoelectric and insulation properties of the piezoelectric material may deteriorate.

Methods for measuring the composition of the piezoelectric material are not particularly limited. Examples of methods include X-ray fluorescence spectroscopy, inductively coupled plasma (ICP) optical emission spectrometry, and atomic absorption spectrometry. The weight ratio and the composition ratio of the elements contained in the piezoelectric material are calculable using any measurement method.

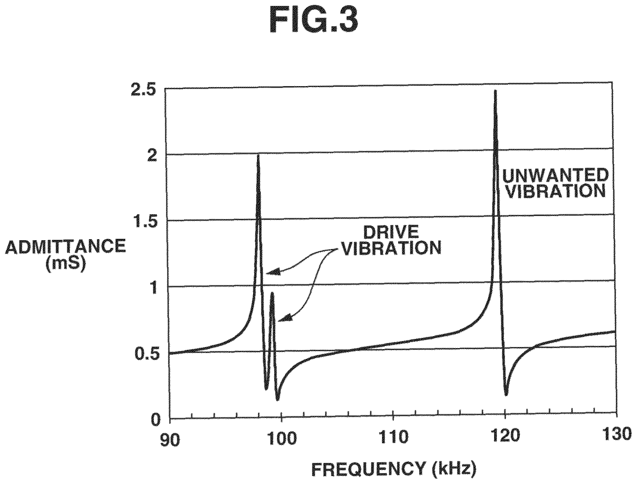

Fig. 3 illustrates an example of an impedance characteristic (vertical axis represents admittance) of the vibration member. The horizontal axis represents frequency, and the vertical axis represents admittance without loss components ($= \omega Cd$). In measuring an admittance, the vibration member and the contact member are not brought into contact with each other, and the measurement is performed in a state where the vibration member can vibrate freely. Frequencies indicating peaks of admittance correspond to frequencies of the vibration modes and indicate the ease of current flow, i.e., magnitudes of the vibration modes. The characteristics are obtained by applying an alternating current signal with a small amplitude (e.g., 50 to 500 mV) to the piezoelectric element and performing frequency analysis on the response results and can be measured using an impedance analyzer.

The first and second vibration modes illustrated in Figs. 2C and 2D described above correspond to two drive vibrations with peaks observed at frequencies of 95 to 105 kHz. In order to induce and use both of the first and second vibration modes at a frequency, the frequency difference ($\Delta f$) between the first and second vibration modes in a state where the vibration member is not pressed against the contact member is desirably 1 to 3 kHz. The second vibration mode is at a higher frequency than the first vibration mode. The resonance frequency varies depending on the piezoelectric element used or the shape of the elastic member.

The unwanted vibration mode illustrated in Fig. 2E described above corresponds to a vibration with a peak at a frequency of 115 to 125 kHz. The frequency at which the admittance reaches its maximum is a resonance frequency fu of unwanted vibration. The resonance frequency difference ($\Delta f2$) between fu and the second vibration mode is desirably 15 to 25 kHz, and the unwanted vibration mode is at a higher frequency than the second vibration mode.

A part of the frequency band between the higher one of the resonance frequencies of the first and second vibration modes and the resonance frequency fu of the unwanted vibration mode is used as a frequency domain for use in driving the vibration-type actuator 200.

Further, the equivalent circuit constants of drive vibration and unwanted vibration described below can be calculated by performing equivalent circuit analysis on the vibration member using the measurement results. The measurement is performed using different temperatures of the vibration member 210 as needed to obtain equivalent circuit constants for each temperature.

It is to be noted that the frequencies of the vibration modes vary depending on the densities, Young's moduli, and shapes of the piezoelectric element and the elastic member.

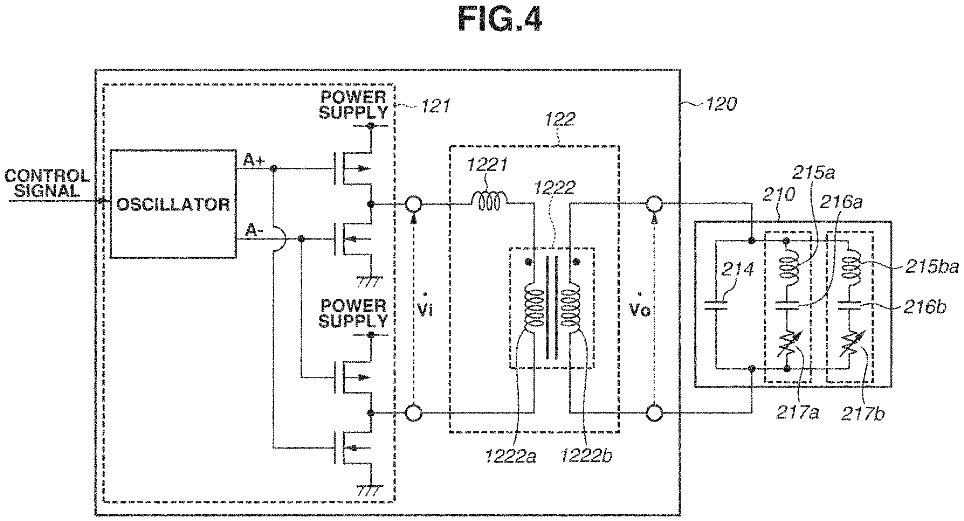

Fig. 4 is a circuit diagram illustrating the drive unit 120 of the vibration-type drive apparatus according to the present invention. An equivalent circuit of the vibration member 210 includes a resistor-inductor-capacitor (RLC) series circuit corresponding to mechanical vibration of the vibration member 210 and a capacitance Cd 214 of the piezoelectric element 211. The capacitance Cd 214 is connected in parallel to the RLC series circuit. In Fig. 4, components illustrated as two RLC series circuits corresponding to drive vibration and unwanted vibration are illustrated in parallel to the capacitance 214. The first and second vibration modes described above with reference to Figs. 2C and 2D are used in driving the vibration-type actuator according to the present invention, and in a case where the vibration member is pressed against the contact member and excited, the frequencies of the vibration modes largely overlap. Thus, the components will be described as components responsible for one drive vibration of the first and second vibration modes together on the equivalent circuit. Hereinafter, a frequency at which the admittance reaches its maximum by the first vibration mode will be referred to as a drive frequency fm.

(Equivalent Circuit Constant)

Each RLC series circuit includes an equivalent coil, an equivalent capacitor, and an equivalent resistor. A capacitance, an inductance, and a resistance corresponding to the components responsible for drive vibration will be denoted by Lm, Cm, and Rm, respectively. The equivalent circuit constants (Lm, Cm, Rm) for drive vibration can be obtained by generating the first vibration mode in the vibration member, detecting changes in admittance at that time, and performing equivalent circuit analysis on the detection results. Since the change in admittance is greater in the first vibration mode than in the second vibration mode, it is possible to distinguish between the first and second vibration modes.

Equivalent circuit constants (Lu, Cu, Ru) in unwanted vibration can be obtained by performing equivalent circuit analysis on the change in admittance by the unwanted vibration mode.

The capacitance Cd 214 is a capacitance in a case where a signal with a frequency (e.g., 1 kHz) sufficiently far from the mechanical vibration is applied to the piezoelectric element.

(Transformer)

A transformer 1222 for boosting includes a primary side coil 1222a and a secondary side coil 1222b coupled together magnetically. A flow of current into the primary side coil 1222a generates a magnetic flux, and the current flows inductively into the secondary side coil 1222b, and then a transformed voltage is generated.

The number of turns of the secondary side coil 1222b of the transformer 1222 according to the present exemplary embodiment is several times to about 22 times with respect to the number of turns of the primary side coil 1222a, and the primary side voltage amplitude is amplified based on the ratio of turns.

The current that flows in the primary side coil 1222a of the transformer 1222 is an alternating current that flows from the power supply side of the pulse signal generation circuit 121 to a ground (GND) side through a coil 1221 and the primary side coil 1222a via a selected switching element. Thus, the power consumption of the primary side of the transformer 1222 varies depending on an on-resistance of the switching element, resistance components of the coil 1221 and the primary side coil 1222a, and the current value. Due to the ratio of turns in the transformer 1222, the primary side current is greater than the secondary side current according to the present exemplary embodiment, so that the power consumption is also higher. On the other hand, the current that flows in the secondary side of the transformer 1222 is an alternating current that flows in at least one of the capacitance Cd 214 of the piezoelectric element 211 and the mechanical vibration portion (RLC series circuit) through the secondary side coil 1222b.

(Electrical Resonance Frequency)

An electrical resonance frequency fe of the vibration-type drive apparatus according to the present exemplary embodiment is controllable by the transformer 1222, the coil 1221, and the capacitance Cd 214 of the piezoelectric element. The magnitudes of the voltages $V_A$ and $V_B$ in the drive frequency band are controllable by controlling the electrical resonance frequency fe.

Formula 1 below represents the electrical resonance frequency fe.

EP 4 439 966 A1

[Formula 1]

$$\text{Electrical Resonance } fe = \frac{\sqrt{\frac{(Le + L1)}{\{L2 \cdot (Le+L1) - M^2\} \cdot Cd}}}{2\pi} \quad \text{Formula 1.}$$

In the formula, 'Le' is the inductance of the coil 1221, 'L1' is the inductance of the primary side coil 1222a of the transformer, 'L2' is the inductance of the secondary side coil 1222b of the transformer, 'M' is a mutual inductance of the transformer 1222, which is expressed by formula 2 below. Further, 'Cd' is the capacitance of the piezoelectric element 214.

[Formula 2]

$$M = \sqrt{L1 \cdot L2} \quad \text{Formula 2.}$$

The electrical resonance frequency fe is desirably higher to some extent than the drive frequency. For example, the range from 1.4 times to 1.8 times a center frequency of the drive frequency domain is desirable because power consumption due to unwanted vibration and harmonics is reduced. In a case where fe is less than 1.4 times, the voltage applied in the unwanted vibration mode increases, and power related to unwanted vibration increases. On the other hand, in a case where fe is greater than 1.8 times the drive frequency, harmonics generated by the power supply in addition to a fundamental wave are boosted, and power increases.

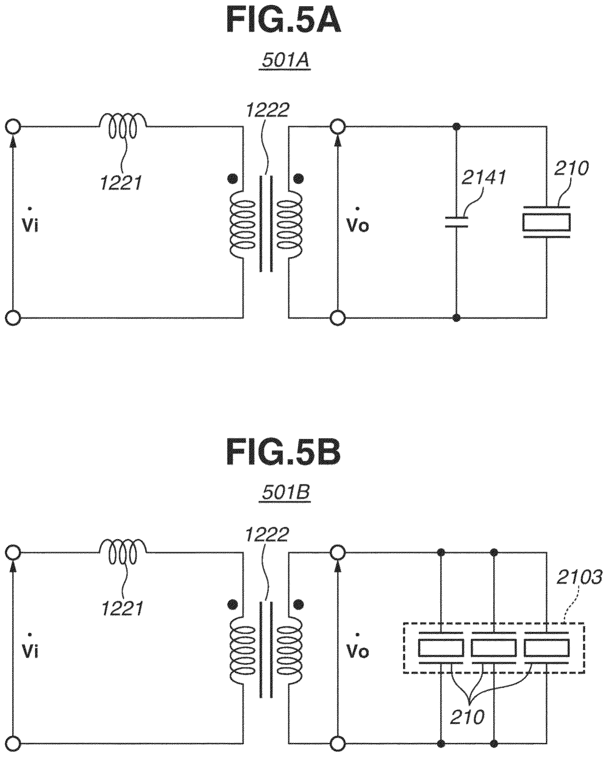

The electrical resonance frequency fe can be controlled by changing the inductance Le of the coil 1221. Alternatively, a capacitor may be connected in parallel to the vibration member on the secondary side of the transformer 1222 in order to control fe. Fig. 5A illustrates a circuit 501A in which a capacitance 2141 is connected in parallel to a piezoelectric element on the secondary side of the transformer 1222.

While Fig. 4 illustrates the vibration-type drive apparatus including one vibration member 210 as a representative example, a plurality of equivalent vibration members may be prepared and used to drive one contact member. Fig. 5B illustrates a circuit 501B as an equivalent circuit in a case where, for example, a composite vibration member 2103 composed of three vibration members 210 is included.

In Fig. 4, only a circuit configuration that generates the alternating current voltage $V_A$ is illustrated, and a circuit configuration that generates the alternating current voltage $V_B$ is not illustrated. The circuit configuration that generates the alternating current voltage $V_B$ is similar to the circuit configuration that generates the alternating current voltage $V_A$, so that the redundant descriptions are omitted.

Next, the pulse signal generation circuit will be described below with reference to Figs. 6A and 6B.

(Pulse Signal Generation Circuit)

The drive unit 120 roughly includes the pulse signal generation circuit 121 and the step-up circuit 122. The pulse signal generation circuit 121 includes an oscillator for generating pulse signals and a switching circuit (H-bridge circuit) for switching the direct current power supply based on pulse signals output from the oscillator, and outputs an alternating current pulse signal Vi.

Fig. 6A is a timing chart illustrating pulse signals output from the oscillator of the pulse signal generation circuit 121. The oscillator outputs a phase-A pulse signal (A+) and a phase-A inverted pulse signal (A-) based on a control signal input from the control unit 110 and containing phase difference information, frequency information, and pulse width information. The phase of the phase-A inverted pulse signal (A-) is shifted by 180 degrees from the phase of the phase-A pulse signal. A direct current (DC)-DC converter circuit (not illustrated) that supplies direct current power supply is connected to the switching circuit, and as the switching element is turned on/off based on pulse signals output from the oscillator, an alternating current pulse signal Vi, which is an alternating current voltage of rectangular wave, is generated, and the generated alternating current pulse signal Vi is output to the step-up circuit 122.

In order to obtain an alternating current pulse signal Vi with a desired voltage amplitude, the pulse signal generation circuit 121 controls pulse widths (pulse duty) of the phase-A pulse signal and the phase-A inverted pulse signal by pulse width modulation (PWM) control. The pulse widths are set based on control signals input from the control unit 110. Further, while the switching circuit driven by full-bridge is used according to the present exemplary embodiment, this is not a limiting case, and a switching circuit driven by half-bridge may be used.

The alternating current pulse signal Vi generated by the pulse signal generation circuit 121 is input to the step-up circuit 122. The step-up circuit 122 includes the coil 1221 and the transformer 1222, which form a resonance circuit with the capacitance 214 of the piezoelectric element 211, and generate the alternating current voltage $V_A$ with an approximately sinusoidal waveform by boosting the alternating current pulse signal Vi to a desired output voltage Vo.

The polarity of the transformer 1222 may be either one.

The oscillator of the pulse signal generation circuit 121 outputs a phase-B pulse signal (B+) and a phase-B inverted pulse signal (B-) having a phase shifted by 180 degrees from the phase of the phase-B pulse signal (B+) (refer to Fig. 6A), based on a control signal output from the control unit 110 and containing phase difference information, frequency information, and pulse width information. The alternating current voltage $V_B$ is generated by a method similar to the method for generating the alternating current voltage $V_A$.

Fig. 6B is a timing chart illustrating the phase difference between the phase-A pulse signal and the phase-B pulse signal. The phase-A pulse signal and the phase-B pulse signal with a duty of 50% and a phase difference of +90 degrees are illustrated as an example. The time from time t0 to time t4 corresponds to one cycle of the frequency for driving the vibration-type actuator 200, and rising edges of the phase-A pulse signal and the phase-B pulse signal are shifted by one-quarter of the cycle.

A feature of the present exemplary embodiment is that a frequency f1 of a control signal at which the primary side current of the transformer of the vibration-type drive apparatus reaches its minimum is focused on, and the circuit constants for the drive unit 120 are set according to the frequency domain to be used in driving the vibration-type actuator 200. By aligning or bringing the frequency f1 and the resonance frequency fu of unwanted vibration close together, the power consumption of the step-up circuit 122 in the drive frequency band is reduced.

Specifically, the ratio fl/fu of the resonance frequency fu of unwanted vibration to the frequency f1 for the vibration-type drive apparatus according to the present exemplary embodiment is set to satisfy the relationship $0.79 \leq$ fl/fu $\leq 1.21$, and this configuration makes it possible to reduce power consumption.

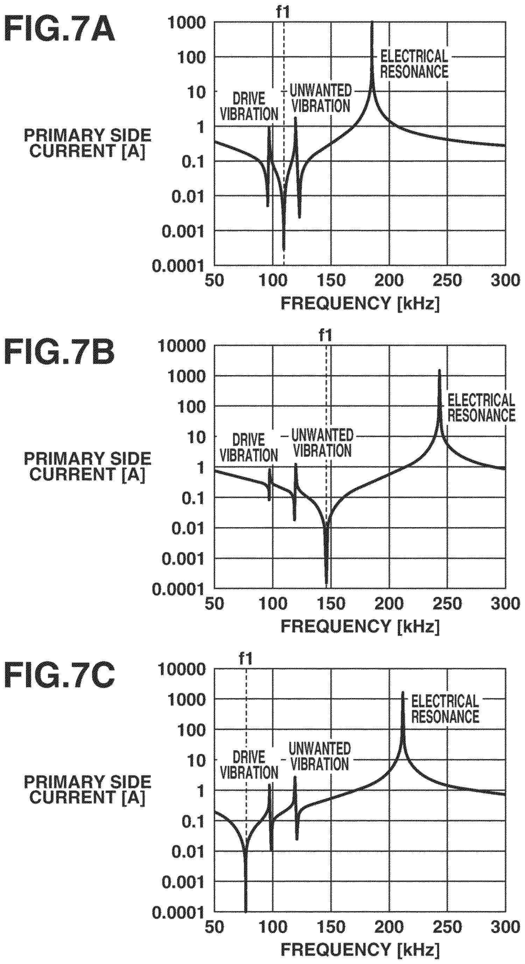

Figs. 7A, 7B, and 7C illustrate frequency characteristics of the primary side current of the transformer in driving the vibration-type drive apparatus according to the present exemplary embodiment.

The vibration-type actuators of the vibration-type drive apparatuses corresponding to Figs. 7A, 7B, and 7C are all the same, whereas the coils 1221 and the transformers 1222 of the drive units of the vibration-type drive apparatuses differ from each other.

According to the present exemplary embodiment, it is possible to calculate the frequency f1 by using circuit simulation software (collectively referred to as "SPICE"). Use of circuit simulation software makes it possible to calculate the frequency f1 easily even in a case where the vibration member includes a plurality of RLC series circuits, i.e., a plurality of mechanical vibration modes.

The frequency f1 can be calculated approximately using formula 3 below. Specifically, an inductance Lm 215a of a drive vibration equivalent coil, a capacitance Cm 216a of a drive vibration equivalent capacitor, the capacitance Cd 214, and the inductance L2 of the secondary side coil 1222B of the transformer are substituted into formula 3 below.

According to formula 3, the frequency f1 is a function of parameters related to the vibration member 210 and the inductance L2 of the secondary side coil 1222b of the transformer 1222. Specifically, the frequency f1 can be adjusted by changing the inductance L2 without changing the vibration member 210. The frequency f1 derived by any of the methods can be used according to the present invention.

[Formula 3]

$$f_1 = \frac{1}{2\pi\sqrt{\frac{(C_d + C_m)}{1/L_2 + 4/L_m}}} \qquad \text{Formula 3.}$$

In Figs. 7A, 7B, and 7C, there are decreases in current corresponding to the frequency f1 in addition to decreases in current corresponding to the drive vibration and the unwanted vibration.

A vertical axis of a graph in Fig. 7A represents the current that flows in the primary side coil 1222a of the transformer according to an eleventh example. While the unwanted vibration frequency is 120 kHz, f1 is 111.5 kHz (fl/fu = 0.93). In Fig. 7A, f1 is between the drive vibration and the unwanted vibration.

A vertical axis of a graph in Fig. 7B represents the current that flows in the primary side coil 1222a of the transformer according to a ninth example. While the unwanted vibration frequency is 120 kHz, f1 is 144.9 kHz (fl/fu = 1.21). In Fig. 7B, f1 is at a higher frequency than the drive vibration.

In both Figs. 7A and 7B, the relationship $0.79 \leq$ fl/fu $\leq 1.21$ is satisfied, and f1 is aligned with or brought close to fu, whereby power consumption due to unwanted vibration is reduced.

Further, in a case where f1 is greater than or equal to 86.9 kHz and less than 152.1 kHz, the vibration-type actuator is driven while power consumption is reduced more effectively.

(Temperature Dependence of Electrical Resonance)

The capacitance Cd 214 of the piezoelectric element and the equivalent circuit constants of the mechanical vibration are temperature-dependent to some extent, so that the frequency f1 varies with the temperature at which the vibration-type actuator is driven. Especially in a case where the piezoelectric element is composed of a piezoelectric material with successive phase transitions at temperatures lower than room temperature, f1 changes significantly depending on ambient temperature.

Desirably, the vibration-type actuator according to the present exemplary embodiment is configured so that f1 and the resonance frequency fu of unwanted vibration satisfy the relationship $0.79 \leq fl/fu \leq 1.21$ even in a case where the vibration-type actuator is placed at -30°C. The vibration-type drive apparatus configured as described above can be used under low temperature environments and can be used for various purposes without adjusting temperatures.

In a case where the piezoelectric element 211 is composed of BCTZ described above, decreasing the temperature of the piezoelectric element from room temperature to -30°C changes vibration characteristics of the piezoelectric element 211 compared to those at room temperature.

Describing with reference to the elements illustrated in Fig. 4, the capacitance Cd, the inductance corresponding to the equivalent coil of vibration, the capacitance corresponding to the equivalent capacitor, and the resistance value corresponding to the equivalent resistor change. Consequently, the frequency f1 at which the current that flows in the primary side of the transformer under an environment at -30°C becomes minimum shifts toward a low frequency side compared to f1 at room temperature.

Specifically, f1(-30°C) < f1(room temperature).

While the resonance frequency fu of unwanted vibration also shifts toward lower frequency side at low temperatures, since the shift of f1 is greater, fl/fu at -30°C becomes smaller than fl/fu at room temperature. In a case where fl/fu at room temperature is in the range of $0.91 \leq f1/fu \leq 1.21$, fl/fu at -30°C satisfies the relationship $0.79 \leq f1/fu \leq 1.21$, so that this is desirable.

Furthermore, in a case where $1.0 \leq f1/fu \leq 1.21$, power consumption due to unwanted vibration is further reduced, so that this is desirable. In a case where fl/fu is in the range of $1.0 \leq f1/fu \leq 1.21$, the current reaches its minimum value at a high frequency side of drive vibration (Fig. 7B). Thus, power consumption due to unwanted vibration is further reduced in the frequency domain close to the drive vibration, so that this is desirable.

Meanwhile, Fig. 7C illustrates the current that flows in the primary side coil 1222a of the transformer of the vibration-type drive apparatus that does not satisfy the relationship $0.79 \leq f1/fu \leq 1.21$ (first comparative example).

Specifically, while the frequency of unwanted vibration is 120 kHz, the frequency f1 is 80 kHz (fl/fu = 0.67). In this example, fl/fu < 0.79, and the frequency f1 is significantly far toward the low frequency side from the frequency fu in Fig. 7C. Thus, there is no decrease in primary side current value in the frequency band from the frequency of drive vibration in the vicinity of 100 kHz to the frequency of 120 kHz of unwanted vibration. This indicates that no effect of reducing power consumption due to unwanted vibration is produced.

<Specific Example of Step-up Circuit Design>

According to the present exemplary embodiment, the step-up circuit 122 is designed so that the frequency f1 at which the current in the primary side of the transformer 1222 becomes minimum and the resonance frequency fu of unwanted vibration satisfy the relationship $0.79 \leq f1/fu \leq 1.21$.

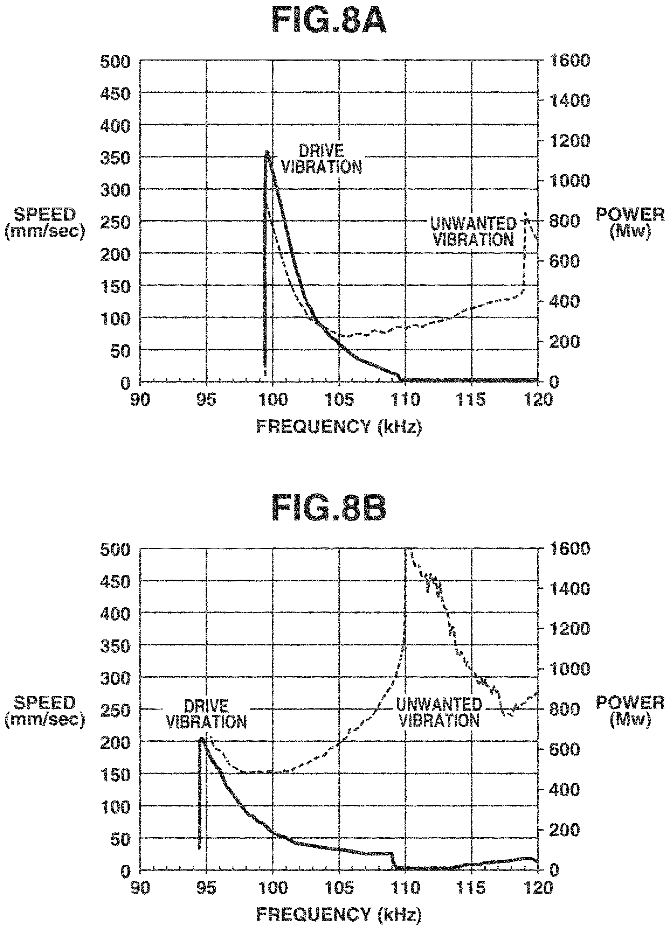

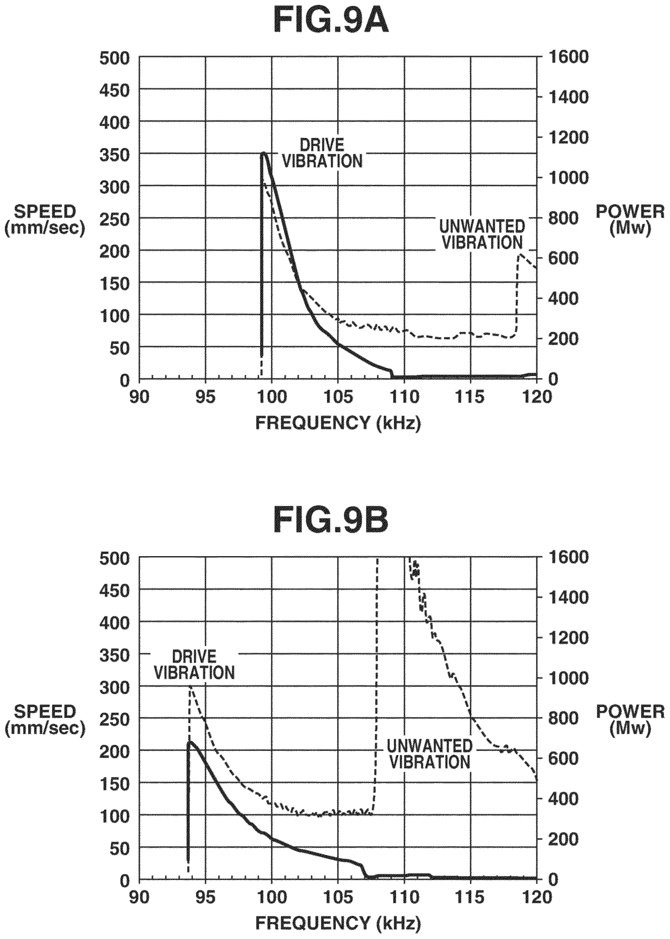

Figs. 8A, 8B, 9A, and 9B are diagrams illustrating relationships between the driving speed (moving speed of the contact member 220), power consumption, and drive frequency, in a case where the frequency of the drive voltage is swept from the high frequency side to the low frequency side and the vibration-type actuator is driven.

According to the present exemplary embodiment, the phase difference between the drive voltages applied to the two electrodes of the piezoelectric element is set to 90°, as described above with reference to Fig. 2B. Further, the drive frequency fm is the frequency of the drive voltage at which the admittance reaches its maximum by the first vibration mode as described above.

In each of Figs. 8A, 8B, 9A, and 9B, a frequency at which a speed profile drawn with a solid line reaches its maximum value approximately corresponds to the drive frequency fm.

The speed reaches its maximum in the vicinity of the drive frequency fm, whereas the power exhibits a maximum value in the vicinity of the unwanted vibration frequency fu in the frequency domain that is approximately 15 kHz to 25 kHz higher than the drive frequency fm.

Figs. 8A and 8B respectively correspond to the first and second comparative examples. In the first and second comparative examples, f1 is not in the vicinity of the unwanted vibration frequency fu, and fl/fu is smaller than 0.79. After the drive voltage frequency exceeds the unwanted vibration frequency fu, power related to unwanted vibration decreases gradually with respect to the drive voltage frequency. Thus, both powers overlap and increase in the drive range between fu and fm in which the speed is greater than 0.

Further, it is understood that in the drive range, the power decreases with decreasing drive frequency and reaches its minimum value and thereafter increases as it approaches the drive vibration. Specifically, the sign of the slope of the power with respect to the drive voltage frequency reverses at the frequency at which the power becomes minimum. In a case where the drive voltage frequency is changed by a predetermined amount, the power may increase or decrease depending on the drive frequency range, so that it becomes difficult to control the power consumption at the drive voltage frequency.

Table 1 summarizes the parameters related to the vibration member 210 and the parameters of the step-up circuit 122.

With the vibration-type actuators with excellent controllability, the power ($P_{25mm/s}$) at 25 mm/s is smaller than the power ($P_{100mm/s}$) at 100 mm/s. However, in the first and second comparative examples, $P_{25mm/s}$ is greater than $P_{100mm/s}$, and controllability is poor.

Figs. 9A and 9B respectively correspond to the ninth example and a tenth example. The tenth example corresponds to a state where the vibration-type actuator used in the ninth example is cooled to -30°C. In the ninth and tenth examples, f1 is in the vicinity of the unwanted vibration frequency fu, and the relationship $0.79 \leq f1/fu \leq 1.21$ is satisfied. Thus, after the drive voltage frequency exceeds the resonance frequency of unwanted vibration, the power decreases rapidly with respect to the frequency and reaches its minimum value, compared to the first and second comparative examples (refer to Figs. 8A and 8B) in which fl/fu is outside the range of the present invention. Controllability is excellent, and $P_{25mm/s}$ is smaller than $P_{100mm/s}$.

In order to reduce power related to unwanted vibration, the unwanted vibration frequency fu may be increased and separated from fm. However, in a case where the design of the vibration member is changed to increase fu - fm, $\Delta f$ decreases with a decrease in fu - fm and becomes smaller than 1 kHz. In a case where $\Delta f < 1$ kHz, the drive characteristics of the vibration-type actuator may decrease significantly, so that this is undesirable.

On the other hand, in a case where fu - fm is excessively small, power related to unwanted vibration is further superimposed in the drive range. Thus, fu - fm is desirably 18.0 to 23 kHz, i.e., the relationship $23 \geq fu - fm \geq 18$ kHz is desirably satisfied.

[Table 1]

| | Lm(mH) | Cm(pF) | Cd(pF) | L1(uH) | L2(mH) | Le(uH) | fm(kHz) | fu(kHz) | fe(kHz) | f 1 (kHz) | fl/fu | fu-fm (kHz) | * |
|---|---|---|---|---|---|---|---|---|---|---|---|---|---|
| CEx. 1 | 340 | 7.8 | 800 | 30 | 5.2 | 4.7 | 97.7 | 120.0 | 212.0 | 80.0 | 0.67 | 22.3 | 4 |
| CEx. 2 | 122 | 25.2 | 1100 | 30 | 5.2 | 4.7 | 90.8 | 109.7 | 66.5 | 71.2 | 0.65 | 18.9 | 4 |
| CEx. 3 | 383 | 6 | 726 | 30 | 5.2 | 10 | 105.0 | 128.0 | 163.8 | 83.8 | 0.65 | 23.0 | 4 |
| CEx. 4 | 276 | 13.3 | 560 | 29.4 | 7.77 | 10 | 83.1 | 101.5 | 151.4 | 79.5 | 0.78 | 18.4 | 4 |
| Ex. 1 | 286 | 10.4 | 916 | 18.3 | 1.52 | 10 | 92.3 | 111.0 | 242.8 | 135.5 | 1.22 | 18.7 | 1 |
| Ex. 2 | 286 | 10.4 | 916 | 18 | 2.6 | 10 | 92.3 | 111.0 | 172.6 | 104.4 | 0.94 | 18.7 | 2 |
| EX. 3 | 286 | 10.4 | 916 | 18 | 3 | 6.8 | 92.3 | 111.0 | 183.4 | 97.5 | 0.88 | 18.7 | 3 |
| Ex.4 | 286 | 10.4 | 916 | 18 | 3.5 | 4.7 | 92.3 | 111.0 | 195.3 | 90.5 | 0.82 | 18.7 | 3 |
| Ex.5 | 275 | 10.2 | 851 | 18.3 | 1.52 | 10 | 95.0 | 116.0 | 242.8 | 140.6 | 1.21 | 21.0 | 1 |
| Ex.6 | 275 | 10.2 | 851 | 18 | 2.6 | 10 | 95.0 | 116.0 | 179.0 | 108.4 | 0.93 | 21.0 | 2 |
| Ex.7 | 275 | 10.2 | 851 | 18 | 3 | 6.8 | 95.0 | 116.0 | 190.2 | 101.2 | 0.87 | 21.0 | 3 |
| Ex.8 | 275 | 10.2 | 851 | 18 | 3.5 | 4.7 | 95.0 | 116.0 | 202.7 | 94.0 | 0.81 | 21.0 | 3 |
| Ex.9 | 340 | 7.8 | 800 | 18.3 | 1.52 | 10 | 97.7 | 120.0 | 242.8 | 144.9 | 1.21 | 22.3 | 1 |
| Ex. 10 | 122 | 25.2 | 1100 | 18.3 | 1.52 | 10 | 90.8 | 109.7 | 242.8 | 124.7 | 1.14 | 18.9 | 1 |
| Ex.11 | 340 | 7.8 | 800 | 18 | 2.6 | 10 | 97.7 | 120.0 | 184.7 | 111.5 | 0.93 | 22.3 | 2 |
| Ex. 12 | 340 | 7.8 | 800 | 18 | 3 | 6.8 | 97.7 | 120.0 | 196.2 | 104.0 | 0.87 | 22.3 | 3 |
| Ex. 13 | 340 | 7.8 | 800 | 18 | 3.5 | 4.7 | 97.7 | 120.0 | 209.0 | 96.6 | 0.80 | 22.3 | 3 |
| Ex.14 | 276 | 13.3 | 560 | 25 | 6.4 | 10 | 83.1 | 101.5 | 157.3 | 86.9 | 0.86 | 18.4 | 3 |
| Ex.15 | 383 | 6 | 726 | 18.3 | 1.52 | 10 | 105.0 | 128.0 | 242.8 | 152.1 | 1.19 | 23.0 | 1 |
| Ex.16 | 383 | 6 | 726 | 18 | 2.6 | 10 | 105.0 | 128.0 | 193.8 | 116.9 | 0.91 | 23.0 | 2 |
| Ex. 17 | 383 | 6 | 726 | 18 | 3 | 6.8 | 105.0 | 128.0 | 206.0 | 109.1 | 0.85 | 23.0 | 3 |
| Ex.18 | 383 | 6 | 726 | 18 | 3.5 | 4.7 | 105.0 | 128.0 | 219.4 | 101.2 | 0.79 | 23.0 | 3 |
| Ex.19 | 286 | 10.4 | 916 | 10 | 2.25 | 6.8 | 92.3 | 111.0 | 174.3 | 112.0 | 1.0 | 18.7 | 1 |
| Ex.20 | 286 | 10.4 | 916 | 10 | 2.56 | 6.8 | 92.3 | 111.0 | 163.4 | 105.2 | 0.9 | 18.7 | 2 |
| Ex.21 | 286 | 10.4 | 916 | 10 | 2.89 | 6.8 | 92.3 | 111.0 | 153.8 | 99.2 | 0.9 | 18.7 | 3 |

| | Lm(mH) | Cm(pF) | Cd(pF) | L1(uH) | L2(mH) | Le(uH) | fm(kHz) | fu(kHz) | fe(kHz) | f 1 (kHz) | fl/fu | fu-fm (kHz) | * |
|---|---|---|---|---|---|---|---|---|---|---|---|---|---|
| Ex.22 | 286 | 10.4 | 916 | 5 | 1.805 | 4.7 | 92.3 | 111.0 | 177.8 | 124.6 | 1.1 | 18.7 | 1 |
| Ex.23 | 286 | 10.4 | 916 | 5 | 2 | 6.8 | 92.3 | 111.0 | 154.9 | 118.5 | 1.1 | 18.7 | 1 |
| Ex.24 | 286 | 10.4 | 916 | 5 | 2.205 | 10 | 92.3 | 111.0 | 137.2 | 113.1 | 1.0 | 18.7 | 1 |
| Ex.25 | 275 | 10.2 | 851 | 10 | 2.25 | 6.8 | 95.0 | 116.0 | 180.8 | 116.2 | 1.0 | 21.0 | 1 |
| Ex.26 | 275 | 10.2 | 851 | 10 | 2.56 | 6.8 | 95.0 | 116.0 | 169.5 | 109.2 | 0.9 | 21.0 | 2 |
| Ex.27 | 275 | 10.2 | 851 | 10 | 2.89 | 6.8 | 95.0 | 116.0 | 159.5 | 103.0 | 0.9 | 21.0 | 3 |
| Ex.28 | 275 | 10.2 | 851 | 5 | 1.805 | 4.7 | 95.0 | 116.0 | 184.5 | 129.3 | 1.1 | 21.0 | 1 |
| Ex.29 | 275 | 10.2 | 851 | 5 | 2 | 6.8 | 95.0 | 116.0 | 160.7 | 123.0 | 1.1 | 21.0 | 1 |
| Ex.30 | 275 | 10.2 | 851 | 5 | 2.205 | 10 | 95.0 | 116.0 | 142.3 | 117.3 | 1.0 | 21.0 | 1 |
| Ex.31 | 340 | 7.8 | 800 | 10 | 2.25 | 6.8 | 97.7 | 120.0 | 186.5 | 119.6 | 1.0 | 22.3 | 1 |
| Ex.32 | 340 | 7.8 | 800 | 10 | 2.56 | 6.8 | 97.7 | 120.0 | 174.8 | 112.3 | 0.9 | 22.3 | 2 |
| Ex.33 | 340 | 7.8 | 800 | 10 | 2.89 | 6.8 | 97.7 | 120.0 | 164.5 | 105.9 | 0.9 | 22.3 | 3 |
| Ex.34 | 340 | 7.8 | 800 | 5 | 1.805 | 4.7 | 97.7 | 120.0 | 190.3 | 133.2 | 1.1 | 22.3 | 1 |
| Ex.35 | 340 | 7.8 | 800 | 5 | 2 | 6.8 | 97.7 | 120.0 | 165.7 | 126.7 | 1.1 | 22.3 | 1 |
| Ex.36 | 340 | 7.8 | 800 | 5 | 2.205 | 10 | 97.7 | 120.0 | 146.8 | 120.8 | 1.0 | 22.3 | 1 |
| Ex.37 | 383 | 6 | 726 | 10 | 2.25 | 6.8 | 105.0 | 128.0 | 195.7 | 125.5 | 1.0 | 23.0 | 2 |
| Ex.38 | 383 | 6 | 726 | 10 | 2.56 | 6.8 | 105.0 | 128.0 | 183.5 | 117.8 | 0.9 | 23.0 | 2 |
| Ex.39 | 383 | 6 | 726 | 10 | 2.89 | 6.8 | 105.0 | 128.0 | 172.7 | 111.1 | 0.9 | 23.0 | 3 |
| Ex.40 | 383 | 6 | 726 | 5 | 1.805 | 4.7 | 105.0 | 128.0 | 199.7 | 139.8 | 1.1 | 23.0 | 1 |
| Ex.41 | 383 | 6 | 726 | 5 | 2 | 6.8 | 105.0 | 128.0 | 174.0 | 132.9 | 1.0 | 23.0 | 1 |
| Ex.42 | 383 | 6 | 726 | 5 | 2.205 | 10 | 105.0 | 128.0 | 154.1 | 126.7 | 1.0 | 23.0 | 1 |

CEx.: Comparative Example
Ex.: Example
*: Power Consumption Evaluation Rank

In Table 1, power consumption evaluation ranks are expressed as four-rank relative values using, as a reference, ' $1.0 \le f1/fu \le 1.21$', which is a condition where power consumption is minimized. In rank 4, $P_{25mm/s} > P_{100mm/s}$. In ranks 3, 2, and 1, $P_{25mm/s} < P_{100mm/s}$. More specifically, $P_{100mm/s} < 575$ mw in rank 3, $P_{100mm/s} < 550$ mw in rank 2, and $P_{100mm/s} < 500$ mW in rank 1. Rank 1 is the evaluation rank with the lowest power consumption, whereas rank 4 is the evaluation rank with high power consumption.

As described above, designing the step-up circuit so that the frequency f1 of the primary side current of the transformer and the resonance frequency fu of unwanted vibration satisfy the relationship $0.79 \le f1/fu \le 1.21$ makes it possible to improve controllability of the vibration-type actuator and reduce power consumption.

<Second Exemplary Embodiment>

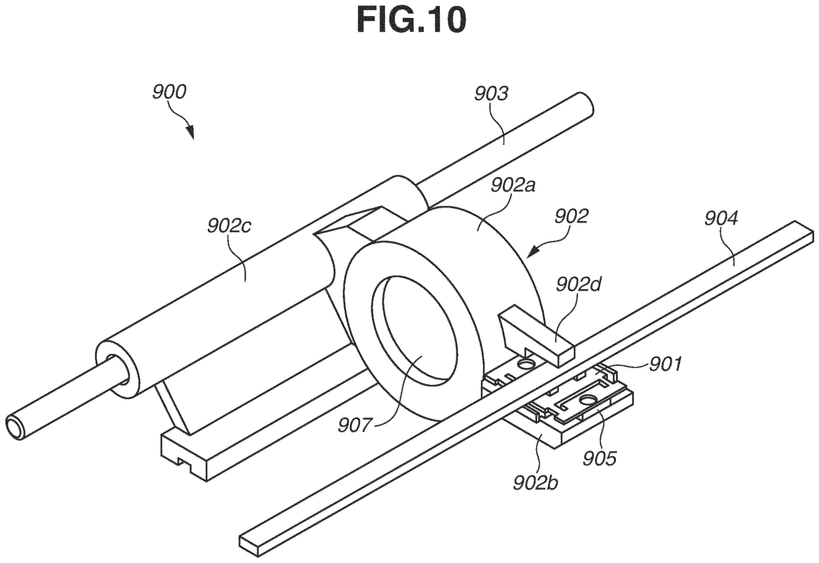

A configuration in which the vibration-type drive apparatus 10 according to the first exemplary embodiment is applied to a lens drive mechanism of an imaging apparatus (optical equipment) according to a second exemplary embodiment will be described below. Fig. 10 is a perspective view illustrating a schematic structure of a lens drive mechanism 900 of a lens barrel of the imaging apparatus. The control apparatus 100 is not illustrated. The lens drive mechanism 900 includes a lens holder 902, a vibration member 901 for driving the lens holder 902, a press magnet 905, a first guide bar 903, a second guide bar 904, and a substrate (not illustrated).

The lens holder 902 is a part corresponding to the contact member 2 in Fig. 2A. The lens holder 902 includes a body portion 902a having a cylindrical shape, a holding portion 902b holding the vibration member 901 and the press magnet 905, a first guide portion 902c engaged with the first guide bar 903 to thereby form a first guide portion, and an anti-detachment portion 902d. The body portion 902a holds a lens 907. The first guide bar 903 and the second guide bar 904 are disposed in parallel to each other, and both end portions of the first guide bar 903 and the second guide bar 904 are fixed to the substrate (not illustrated). The lens 907 (optical element) herein is a lens (focus lens) for autofocus operations.

The press magnet 905 serving as pressing means includes a permanent magnet and two yokes placed at both ends of the permanent magnet. A magnetic circuit is formed between the press magnet 905 and the second guide bar 904, and a suction force is generated between the members. Consequently, front edges of projection portions of the vibration member 901 at two locations are held in a state of being pressed against the second guide bar 904 by a predetermined force, and a second guide portion is formed.

A predetermined space is formed between the press magnet 905 and the second guide bar 904. Thus, in a case where the second guide portion receives external forces, the projection portions of the vibration member 901 and the second guide bar 904 may be separated from each other. However, in this case, the anti-detachment portion 902d of the lens holder 902 is brought into contact with the second guide bar 904, and the holding portion 902b of the lens holder 902 returns to its original position. This causes the projection portions of the vibration member 901 to return to the state of being in contact with the second guide bar 904.

The vibration member 901 has a structure similar to the structure of the vibration member 210 according to the first exemplary embodiment, so that detailed descriptions of the configuration are omitted. By applying two-phase alternating current voltages to a piezoelectric element of the vibration member 901, an elliptical vibration is generated in the two projection portions, and a friction driving force is generated between the vibration member 901 and the second guide bar 904. At this time, since the first guide bar 903 and the second guide bar 904 are fixed, the generated friction driving force moves the lens holder 902 in a length direction of the first guide bar 903 and the second guide bar 904. This makes it possible to perform autofocus operations by adjusting the position of the lens 907.

While the lens drive mechanism 900 uses a magnetic force (the press magnet 905) as a press mechanism, this is not a limiting case, and a spring biasing force may be used. Further, while the lens drive mechanism 900 is configured as a linear vibration-type drive apparatus, this is not a limiting case, and the lens drive mechanism may be configured as a rotary vibration-type actuator in combination with an annular contact member. Specifically, an annular member holding a lens is rotated using a rotation force of the contact member, and at this time, the rotational movement of the annular member is converted into a linear movement amount in an optical axis direction using a method such as engagement between cam pins and cam grooves. This makes it possible to move the lens in the optical axis direction.

While the vibration-type drive apparatus is suitable for use in driving a focus lens (optical element) of an imaging apparatus, this is not a limiting case, and a zoom lens (optical element) can also be driven using a similar configuration. Further, the vibration-type drive apparatus can also be used in a mechanism that drives a lens (optical element) or an image sensor (optical element) for image stabilization.

<Third Exemplary Embodiment>

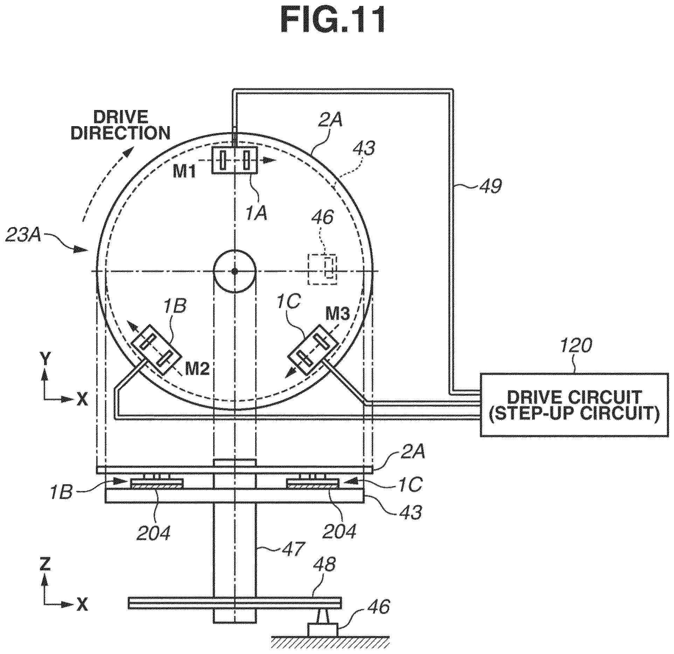

A vibration-type actuator configured to rotate and drive the contact member using the plurality of vibration members 210 described above with reference to Fig. 2A according to a third exemplary embodiment will be described below. Fig. 11 is a diagram illustrating a configuration of a vibration-type actuator 23A according to the third exemplary embodiment, with a plan view at the top and a side view at the bottom.

The vibration-type actuator 23A includes vibration members 1A, 1B, and 1C and a contact member 2A. The vibration members 1A, 1B, and 1C are equivalent to the vibration member 210 described above with reference to Fig. 2A, so that detailed descriptions of configurations thereof are omitted. The contact member 2A has a disk shape. The vibration members 1A, 1B, and 1C are held equidistantly around the circumference of one flat surface of an annular base plate 43 so that lines connecting the projection portions 213 (reference numerals are omitted in Fig. 11) at two locations on each of the vibration members 1A, 1B, and 1C become tangent lines to a circle centered at a rotation center of the contact member 2A. The projection portions 213 of each of the vibration members 1A, 1B, and 1C are in contact with one surface of the contact member 2A, and a rotary shaft 47 is concentrically fixed at the center of the contact member 2A. A scale portion 48 having a disk shape is concentrically fixed to the rotary shaft 47 and rotates at the same angular speed as the contact member 2A. A position sensor 46 is placed to face the scale portion 48. A rotation angle (rotation position) or a rotation speed of the contact member 2A can be detected based on results of reading a scale (not illustrated) of the scale portion 48 by the position sensor 46, and feedback control is performed based on the detection results.

A control apparatus including a drive circuit with the step-up circuit 501B illustrated in Fig. 5B is used in driving the vibration-type actuator 23A. An output voltage Vo output from the step-up circuit 105B is fed as a two-phase alternating current voltage through a flexible cable 49 to the piezoelectric elements 211 of the vibration members 1A, 1B, and 1C connected in parallel, and the vibration members 1A, 1B, and 1C are driven simultaneously.

For example, by generating a friction driving force in the vibration members 1A, 1B, and 1C in directions indicated by arrows M1, M2, and M3 specified in Fig. 11, the contact member 2A is rotated clockwise in the state illustrated at the top of Fig. 11. At this time, with the three vibration members 1A, 1B, and 1C, it is possible to obtain a high torque that is a combination of torques generated by the vibration members. As is well known, the rotation speed and the rotation direction can be controlled by controlling the phase of the two-phase alternating current voltage.

<Fourth Exemplary Embodiment>

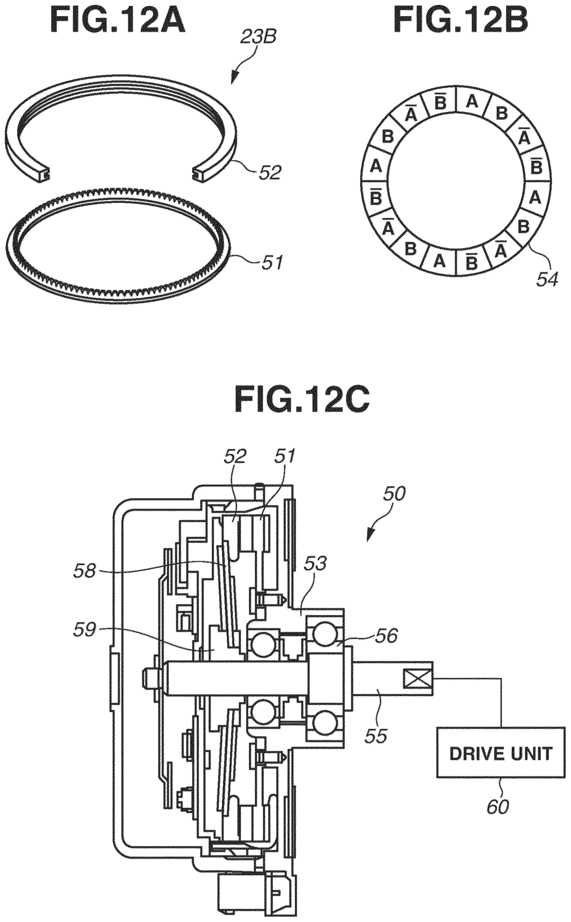

Another example of a vibration-type actuator that rotates and drives a contact member according to a fourth exemplary embodiment will be described below. Fig. 12A is a perspective view illustrating a schematic configuration of a vibration member 51 and a contact member 52 of a vibration-type actuator 23B according to the fourth exemplary embodiment. The vibration member 51 and the contact member 52 both have annular shapes and are disposed concentrically, and the contact member 52 in a state of being supported to rotate freely by a shaft is in contact with the vibration member 51. In Fig. 12A, the contact member 52 is illustrated with a portion cut out.

Fig. 12B is a plan view illustrating an electrode of an annular piezoelectric element 54 of the vibration member 51. The vibration member 51 has a structure in which the annular piezoelectric element 54 is bonded to a lower surface (surface on the opposite side to the surface that is in contact with the contact member 52) of an annular elastic member. An electrode pattern divided into 16 equal parts along its circumference and divided into four phases is formed on the annular piezoelectric element 54.

A control apparatus including a drive circuit including the step-up the circuit 501A described above with reference to Fig. 5A is suitable for use in driving the vibration-type actuator 23B. By applying a predetermined alternating current voltage to the annular piezoelectric element 54 so that the wavenumber of progressive oscillation in the vibration member 51 becomes four during one rotation, the contact member 52 is rotated and driven. The wavenumber of progressive oscillation that is generated in the vibration member 51 is not limited to four. Further, vibration-type actuators that operate based on the foregoing driving principle are well known, so that further detailed descriptions thereof are omitted.

Fig. 12C is a cross-sectional view illustrating a schematic configuration of a rotary drive apparatus 50 using the vibration-type actuator 23B. In the rotary drive apparatus 50, the vibration member 51 is secured to a housing 53 with screws. The vibration member 51 is in contact with a friction material of the contact member 52. An output shaft 55 configured to extract rotational motion of the contact member 52 externally is supported to rotate freely on the housing 53 by a ball bearing 56, and a press spring 58 biases the contact member 52 to bring the contact member 52 into contact with the vibration member 51 and transmits rotation of the contact member 52 to the output shaft 55.

A drive unit 60 of various types of equipment using the rotary drive apparatus 50 serving as a drive source is connected to the output shaft 55 via a mechanism (not illustrated), and the drive unit 60 receives outputs (rotational driving force) of the output shaft 55 and operates.

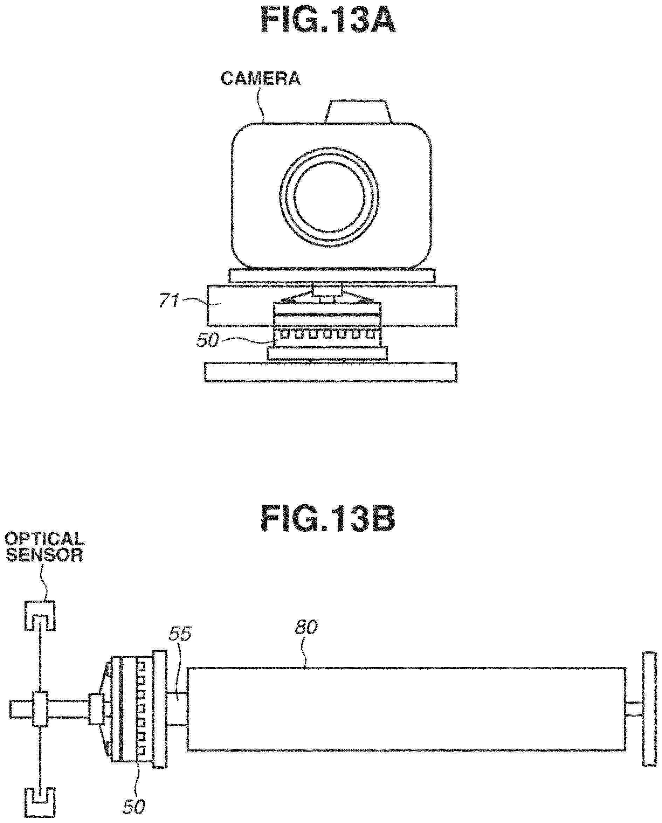

Fig. 13A is a front view illustrating a schematic configuration of a pan head apparatus 70 including the rotary drive apparatus 50. The pan head apparatus 70 has a structure in which a camera (imaging apparatus, apparatus configured to be rotated) fixed to a mounting base 71 (holding member) is rotatable in a pan direction by the rotary drive apparatus 50. Fig. 13B is a front view illustrating a configuration of a transfer drum 81 (rotation drum) of an image forming apparatus, and the transfer drum 81 is rotated and driven by the rotary drive apparatus 50. The transfer drum 80 is directly connected to the output shaft 55 and is rotated by a rotational driving force from the output shaft 55.

While various preferred exemplary embodiments of the present invention have been described above to describe the present invention in detail, the present invention is not limited to any specific exemplary embodiment described above, and various forms within the essence of the invention are also encompassed within the scope of the present invention. For example, driving targets of the control apparatus including the step-up circuit according to the present exemplary embodiment are not limited to vibration-type actuators, and the control apparatus can be used in controlling, for example, a vibration device using a piezoelectric element, a power generation device using a piezoelectric element, or a piezoelectric transducer. Further, while the exemplary embodiments described above are based on the configurations in which a movably disposed contact member moves with respect to a fixed vibration member, the reverse configuration may be employed.

The present invention is not limited to the exemplary embodiments described above, and various changes and modifications are possible without departing from the spirit and scope of the present invention. To disclose the scope of the present invention, the claims below are attached.

This application claims the benefit of priority to Japanese Patent Application No. 2021-190618 filed November 24, 2021, which is incorporated herein by reference in its entirety.

Explanation of Reference Numerals

| | |
|---|---|
| 10 | vibration-type drive apparatus |
| 100 | control apparatus |
| 110 | control unit |
| 111 | command unit |
| 112 | control/arithmetic unit |
| 113 | relative position detection unit |
| 120 | drive unit |
| 121 | pulse signal generation circuit |
| 122 | step-up circuit |
| 1221 | coil |
| 1222 | transformer |
| 1222a | primary side coil of a transformer |
| 1222b | secondary side coil of a transformer |
| 130 | position sensor |
| 200 | vibration-type actuator |
| 210 | vibration member |
| 2103 | composite vibration member |
| 220 | contact member |
| 900 | lens drive mechanism |
| 60 | drive unit of various types of equipment |
| 70 | pan head apparatus |
| 71 | mounting base |
| 80 | rotation drum of an image forming apparatus |

**Claims**

1. A vibration-type drive apparatus comprising:

a vibration-type actuator including a vibration member including an elastic member and an electro-mechanical energy conversion element, and a contact member in contact with the elastic member, the vibration member being configured to vibrate to move the vibration member and the contact member relatively; and
a control apparatus including a drive unit with a transformer configured to transform a drive signal generated based on an input control signal, the transformer having a primary side to which the drive signal is input and a secondary side connected to the electro-mechanical energy conversion element,
wherein the following relationship is satisfied:

$$0.79 \le \mathrm{f1/fu} \le 1.21 \qquad ,$$

where f1 is a frequency of the drive signal at which a current that flows in the primary side of the transformer becomes minimum, and fu is a resonance frequency of a vibration mode other than vibration for use in moving the vibration member and the contact member relatively and is greater than the f1.

2. The vibration-type drive apparatus according to Claim 1, wherein the electro-mechanical energy conversion element includes a first electrode and a second electrode adjacent to each other and forms a first bending vibration mode in which a first region where the first electrode is disposed and a second region where the second electrode is disposed both stretch or contract, and a second bending vibration mode in which the second region contracts while the first region stretches or the second region stretches while the first region contracts.

3. The vibration-type drive apparatus according to Claim 1 or 2, further comprising a coil connected in series with the transformer on the primary side of the transformer.

4. The vibration-type drive apparatus according to any one of Claims 1 to 3, further comprising a capacitor connected in parallel to the electro-mechanical energy conversion element on the secondary side of the transformer.

5. The vibration-type drive apparatus according to any one of Claims 1 to 4, wherein the following relationship is satisfied:

$$23 \ge \mathrm{fu} - \mathrm{fm} \ge 18 \ \mathrm{kHz},$$

where fm is a resonance frequency of a vibration mode corresponding to vibration for use in moving the vibration member and the contact member relatively.

6. The vibration-type drive apparatus according to any one of Claims 1 to 5, wherein the electro-mechanical energy conversion element is a piezoelectric element including a piezoelectric material and an electrode, and the piezoelectric material has a lead content ratio less than 1000 ppm.

7. The vibration-type drive apparatus according to Claim 6, wherein the piezoelectric material contains barium calcium titanate zirconate.

8. The vibration-type drive apparatus according to any one of Claims 1 to 7, wherein the following relationship $0.79 \le \mathrm{f1/fu} \le 1.21$ is satisfied at -30°C.

9. The vibration-type drive apparatus according to any one of Claims 1 to 8, wherein the f1 is greater than or equal to 86.9 kHz and less than 152.1 kHz.

10. Optical equipment comprising:

    the vibration-type drive apparatus according to any one of Claims 1 to 9; and
    an optical element configured to be driven by a vibration-type actuator of the vibration-type drive apparatus.

11. A pan head apparatus comprising:

    the vibration-type drive apparatus according to any one of Claims 1 to 9; and
    a holding member configured to be driven by the vibration-type actuator of the vibration-type drive apparatus.

12. An image forming apparatus comprising:

    the vibration-type drive apparatus according to any one of Claims 1 to 9; and
    a rotation drum configured to be driven by the vibration-type actuator of the vibration-type drive apparatus.

13. Equipment comprising:

    the vibration-type drive apparatus according to any one of Claims 1 to 9; and

a part configured to be driven by the vibration-type actuator of the vibration-type drive apparatus.

14. A control apparatus for a vibration-type actuator including a vibration member including an elastic member and an electro-mechanical energy conversion element and a contact member in contact with the elastic member, the vibration member being configured to vibrate to move the vibration member and the contact member relatively,

wherein the control apparatus includes a drive unit with a transformer configured to transform a drive signal generated based on an input control signal, the transformer having a primary side to which the drive signal is input and a secondary side connected to the electro-mechanical energy conversion element, and

wherein the following relationship is satisfied:

$$0.79 \leq f1/fu \leq 1.21 \qquad ,$$

where f1 is a frequency of the drive signal at which a current that flows in the primary side of the transformer becomes minimum, and fu is a resonance frequency of a vibration mode other than vibration for use in moving the vibration member and the contact member relatively and is greater than the f1.

15. The control apparatus for the vibration-type actuator according to Claim 14, wherein the f1 is greater than or equal to 86.9 kHz and less than 152.1 kHz.

# FIG.1

# FIG.2A

DRIVE DIRECTION

220

213
212 } 210
211

213

# FIG.2B

VA  VB  211

# FIG.2C

213  213  212

Z

211

FIRST VIBRATION MODE

# FIG.2D

213  X  213  212

Y  211

SECOND VIBRATION MODE

# FIG.2E

UNWANTED VIBRATION MODE

# FIG.2F

Y1

X1

X2

# FIG.3

# FIG.4

EP 4 439 966 A1

# FIG.5A

*501A*

# FIG.5B

*501B*

# FIG.6A

PHASE-A
PULSE

PHASE-A
INVERTED
PULSE

PHASE-B
PULSE

PHASE-B
INVERTED
PULSE

# FIG.6B

PULSE
WIDTH: 50%

PHASE-A
PULSE

PHASE DIFFERENCE:
+90 DEGREES

PHASE-B
PULSE

t0    t1    t2    t3    t4                          TIME

**FIG.7A**

**FIG.7B**

**FIG.7C**

# FIG.8A

# FIG.8B

# FIG.9A

# FIG.9B

# FIG.10

EP 4 439 966 A1

# FIG.11

DRIVE
DIRECTION

2A

43

49

M1

1A

46

23A

1B

1C

M3

M2

120

Y

X

DRIVE CIRCUIT
(STEP-UP CIRCUIT)

2A

1B

1C

43

204

204

Z

47

48

X

46

# FIG.12A

*23B*

*52*

*51*

# FIG.12B

*54*

# FIG.12C

*52*  *51*

*50*

*58*

*53*

*59*

*56*

*55*

**DRIVE UNIT**

*60*

# FIG.13A

CAMERA

71

50

# FIG.13B

OPTICAL
SENSOR

55

80

50

## INTERNATIONAL SEARCH REPORT

International application No.

**PCT/JP2022/040382**

### A. CLASSIFICATION OF SUBJECT MATTER

***H02N 2/06***(2006.01)i; ***G02B 7/04***(2021.01)i; ***G03B 17/56***(2021.01)i; ***G03G 21/00***(2006.01)i; ***G03G 21/16***(2006.01)i
FI:   H02N2/06; G02B7/04 E; G03B17/56 B; G03G21/00 370; G03G21/16 161

According to International Patent Classification (IPC) or to both national classification and IPC

### B. FIELDS SEARCHED

Minimum documentation searched (classification system followed by classification symbols)

H02N2/06; G02B7/04; G03B17/56; G03G21/00; G03G21/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-41950 A (CANON KABUSHIKI KAISHA) 23 February 2017 (2017-02-23) paragraphs [0019]-[0096], fig. 1-8, 11-15 | 1-7, 9-15 |
| A | | 8 |

☐ Further documents are listed in the continuation of Box C.      ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **23 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/040382**

| Patent document cited in search report | | | Publication date (day/month/year) | Patent family member(s) | Publication date (day/month/year) |
|---|---|---|---|---|---|
| JP | 2017-41950 | A | 23 February 2017 | US 2017/0054387 A1 paragraphs [0051]-[0108], fig. 1-8, 11-15 CN 106469998 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2879220 B

- JP 2021190618 A